# EUROPEAN PATENT APPLICATION

(11) **EP 4 450 270 A1**
(43) Date of publication of application: **23.10.2024**
(21) Application number: 23168764.1
(22) Date of filing: 19.04.2023
(51) Int. Cl.: B29D 99/00, B29C 65/00, F03D 1/06, B05B 13/04, B25J 11/00, F16B 11/00, B29B 15/12, B29C 37/00, B29C 65/50, B29C 65/52, B29C 70/38, B29L 31/08, B29C 73/10, B29C 73/12, B29C 73/26

(54) **METHOD AND SYSTEM FOR MANUFACTURING A ROTOR BLADE FOR A WIND TURBINE, COMPUTER PROGRAM PRODUCT AND COMPUTER-READABLE STORAGE MEDIUM**

(71) Applicant: Siemens Gamesa Renewable Energy A/S, 7330 Brande (DK)
(72) Inventor: Henrichsen, Soeren Randrup Daugaard, 9310 Vodskov (DK); Nielsen, Per, 9310 Vodskov (DK)
(74) Representative: SGRE-Association

(57) **Abstract**

The present invention relates to a method for manufacturing a rotor blade (10) for a wind turbine (100), comprising: providing a root module (20) having a root module recess (21) at a root module end side (22), providing a tip module (30) having a tip module recess (31) at a tip module end side (32), positioning the root module (20) at the tip module (30) to form a common connection recess (40) with the root module recess (21) and the tip module recess (31), and spraying a connection material (50) onto the common connection recess (40) to provide a firmly bonded connection recess (41) between the root module (20) and the tip module (30). The invention further relates to a system (200) for manufacturing a rotor blade (10) for a wind turbine (100), a computer program product (300) for executing the method and a computer-readable storage medium (400) having stored thereon the computer program product (300).

## Description

### Field of the invention

The present invention relates to a method and a system for manufacturing a rotor blade for a wind turbine, a computer program product for executing the method and a computer-readable storage medium having stored thereon the computer program product.

### Art Background

Wind turbines are a common tool to produce electrical power from wind energy. One way to increase the power production using a wind turbine under given wind conditions is to increase the size of the blades. However, the manufacture of wind turbine blades and their transportation to wind harvesting sites is becoming increasingly difficult for increasing blade sizes. Therefore, wind turbine blades are, for example, manufactured section-wise and connected on-site. It is desirable to keep the number of processing steps necessary for joining and/or connecting the blade sections as small as possible. Furthermore, the joints have to be configured sufficiently strong to withstand the forces acting on the blade during operation of the wind turbine.

WO 2016 198 075 A1 discloses a modular wind turbine blade comprising first and second blade modules having spar caps embedded within their outer shells. The spar caps taper in thickness such that they are tapered from the blade outer surface to the blade inner surface as the thickness decreases, resulting in inwardly tapered recesses being defined in the outer shells. The tapered recesses in the first and second blade modules are aligned when the modules are placed end-to-end to form a continuous double-tapered channel. A connecting member having a double-tapered structure is bonded in the channel to connect the modules together. To avoid problems with glue joints such as cracks in the glue line, EP 1 310 351 A1 proposes a method for joining modular wind turbine blades of composite materials mainly in one piece by vacuum infusion avoiding any glue joints. Further methods for manufacturing rotor blades for wind turbines are described in the international patent application WO 2020/244902 A1.

It is an object of the present invention to improve the known methods and systems for manufacturing rotor blades for wind turbines. This object is achieved by the subject-matters of the claims. In particular, the object is achieved by a method according to claim 1, a system according to claim 8, a computer program product according to claim 9 and a computer-readable storage medium according to claim 10. Further features and details of the invention can be drawn from the dependent claims, the description, and the figures. Features and details discussed with respect to the inventive method are also correlated with the inventive system, the inventive computer program product, the inventive computer-readable storage medium and the other way around.

According to the present invention, a method is proposed for manufacturing a rotor blade for a wind turbine, comprising:
- providing a root module having a root module recess at a root module end side,
- providing a tip module having a tip module recess at a tip module end side,
- positioning the root module at the tip module to form a common connection recess with the root module recess and the tip module recess, and
- spraying a connection material onto the common connection recess to provide a firmly bonded connection recess between the root module and the tip module.

The spraying of the connection material provides several advantages in comparison to conventional solutions like using rigid connection structures. For example, the spraying can be done in a relatively short time allowing short cycle times. Further, providing the connection material by spraying, the connection material can be provided evenly and/or equally on the desired surface of the common connection surface in an easy manner. Consequently, the desired improvement of stability can be reliably achieved. Further, the sprayed connection material can reliably produce vacuum tightness as soon as the connection material is cured. Spraying can also be performed with relatively few process steps compared to conventional laminating methods, for example. That is, processing steps can be reduced. Moreover, spraying is an easily repeatable process which can be constantly provided with the same high production quality.

The root module having a root module recess may be understood as a root module having at least one tapered end portion. The tapered end portion is preferably provided as an outwardly tapered end portion but may also be provided as an inwardly tapered end portion. Same applies in an analogous manner for the tip module.

The root module and the tip module may be provided as the two essential parts for manufacturing the whole rotor blade. However, the root module is not restricted to be necessarily understood as the innermost part of the rotor blade and the part next to the hub when installed, respectively. The tip module is not restricted to be necessarily understood as the outermost part of the rotor blade and the part furthest away from the hub when installed, respectively. That is, there might be provided further modules for manufacturing the rotor blade. In this case, the root module and/or the tip module may be provided with two end sides each having the presently described recess in order to connect a suitable module to each end side. In still other words, the root module and the tip module may be understood as a first module and a second module, wherein there may be provided further modules like a third and a fourth module when manufacturing the rotor blade.

The firmly bonded connection recess may be understood as the root module end side and the tip module end side being firmly bonded to each other by applying the connection material into the common connection recess. The connection material may be sprayed on the surface of each module and at least partially into any possible gap between the root module end side and the tip module end side.

The positioning of the root module and the tip module next to each other may be performed by means of a supporting structure for supporting and/or holding the root module and the tip module in the desired position. The spraying may be performed by means of a suitable sprayer, for example a chopper gun.

The connection material is preferably sprayed layer-wise onto the common connection recess. The at least one layer may or may not fill the common connection recess with the connection material.

According to a further variant of the present invention, it is possible that the connection material comprises a thermoset material. That is, a thermoset material may be sprayed onto the common connection recess. Using a thermoset material, the desired firmly bonded connection between the root module and the tip module can be easily achieved in a stable manner. In a preferred embodiment, epoxy resin may be used as the connection material, or the connection material may comprise epoxy resin.

Further, the connection material may comprise a fiber composite material when carrying out the method. That is, a fiber composite material may be sprayed onto the common connection recess. Using a fiber composite material, the desired firmly bonded connection between the root module and the tip module may be easily achieved in a stable manner. The chopped particles of the fiber composite material will provide structured properties and thus a stable connection between the root module and the tip module. Further, the fiber composite material may reintegrate in the connection process by providing a stable interface.

Moreover, it is possible in a method according to the present invention that the connection material is sprayed onto the common connection recess by means of a robot and a sprayer mounted to the robot. Automatically spraying the connection material onto the common connection recess by means of a robot can be easily and quickly performed. In addition, by using a robot, the spraying can be easily repeated in the same manner. Therefore, the quality of the process and the resulting product can be consistently high. The robot may be understood as an automated and/or automatable spraying means. The spraying means and/or the robot may comprise at least one robotic arm and at least one joint. The sprayer may be mounted at a front end of the robot and/or the robotic arm.

In accordance with a further variant of the present invention, it is possible that a connection insert is firmly bonded to the bonded connection recess. That is, the method may comprise the steps of spraying the connection material onto the common connection recess to provide the firmly bonded connection recess between the root module and the tip module and, thereafter, firmly bonding the connection insert to the bonded connection recess. In particular, the connection insert may be bonded to the connection material of the firmly bonded connection recess after the connection material was cured. The connection insert may be provided as a prefabricated connection insert. Alternatively, or additionally, the connection insert may be dry fiber material or comprise dry fiber material. The connection insert may be shaped complementarily to the bonded connection recess. That is, the connection insert may be provided positive and/or form-fit to the bonded connection recess. Firmly bonding the connection insert to the bonded connection recess may be understood as firmly bonding the connection insert into the bonded connection recess. The connection insert may be bonded to the bonded connection recess by additional connection material, by amending the temperature and/or by amending the pressure in a contact area between the connection insert and the bonded connection recess.

The inventive method may further comprise the following steps:
- curing the connection material, i.e., the connection material sprayed onto the common connection recess,
- roughening the cured connection material of the bonded connection recess, and
- coating the roughened connection material with a connection insert.
That is, the cured connection material may be activated, for example, by means of roughening, before firmly bonding the connection insert to it. Roughening opens up the connection material, for example the fibers of the connection material, to reintegrate into the coating. In this way, a so-called cohesive zone (pseudo plasticity) may be created, which may greatly increase the strength of the connection between the modules to be established. That is, these optional steps may further improve the stability of the connection between the root module and the tip module. Roughening may be understood as activating the surface of the bonded connection recess for the following coating. The activation may be performed by means of an activation tool like a rotating brush or an orbit grinder, for example. The activation may be performed by means of a robot. In this respect, the features described above to the sprayer apply in an analogous manner to the activation tool. That is, the roughening may also be automated by means of the same robot or an additional robot. The coating may be understood as providing a laminate and/or differently shaped prepared part onto the roughened connection material. That is, the connection insert may be provided as a laminate. In other words, the roughened connection material and/or surface of the connection material may be laminated by the connection insert. Bonding the connection insert to the roughened connection material may be performed by vacuum infusion.

Furthermore, in the method according to the present invention, the root module recess may be part of an outer root module surface, and the tip module recess may be part of an outer tip module surface, wherein the connection material may be sprayed onto the common connection recess from the outer environment of the root module and the tip module. Spraying the connection material from outside and/or the environment of the rotor blade to be manufactured onto the common connection recess may be easily automated. The outer root module surface and the outer tip module surface may be part of outwardly tapered portions of each module. That is, the outer root module surface and the outer tip module surface may each face away from each module and/or in the environment of each module. In other words, tapered recesses in the first and second blade modules may be aligned when the root module and the tip module are placed end-to-end, which may form a continuous double-tapered channel facing into the environment of the root module and the tip module. The recesses may be shaped by a tapered part of the modules resulting in a v-shaped channel. However, the channel and/or common connection recess may also be u-shaped or have any other suitable shape for the desired purpose.

A further aspect of the present invention relates to a system for automatically performing the method according to one of the preceding claims, comprising:
- a supporting structure for supporting the root module and the tip module together to form the common connection recess, and
- a robot for spraying the connection material onto the common connection recess to provide the bonded connection between the root module and the tip module.

Therefore, the inventive system brings up the same advantages as described above. The supporting structure may be configured for supporting, positioning and/or holding the root module and the tip module together. That is, the root module and/or the tip module may be supported onto the supporting structure and/or, for example, hanging in the supporting structure to bring and hold it into the desired position. The robot may further be configured to activate and/or roughen the cured connection material as described above. The robot may have one or more robot arms and/or joints. The robot may further be understood as at least one robot. A sprayer and/or activation tool as described above may be mounted to the robot or may be part of the robot. The robot may be automated and/or programmed to perform the above-described methods and/or method steps.

An additional aspect of the present invention relates to a computer program product comprising instructions which, when the computer program product is executed by a computer, cause the computer and/or the above-described system to carry out the method according to the invention. Furthermore, a computer-readable, preferably non-volatile, storage medium having stored thereon the computer program product is provided. Hence, the inventive computer program product and the inventive computer-readable storage medium bring up the above-described advantages as well.

The computer program product may be implemented as a computer readable instruction code in any suitable programming language and/or machine language, such as JAVA, C++, C#, and/or Python. The computer program product may be stored on a computer-readable storage medium such as a data disk, a removable drive, volatile or non-volatile memory, or a built-in memory/processor. The computer program product may further be installed in the robot. The instruction code may program a computer or other programmable devices such as a controller and/or computer in order to perform the desired functions.

Further, the computer program product may be provided and/or be on a network, such as the internet, from which a user may download it as needed. The computer program product may be implemented by means of software, as well as by means of one or more special electronic circuits, that is, in hardware or in any hybrid form, that is, by means of software components and hardware components.

Further measures improving the inventive concept can be drawn from the following description of preferred embodiments, which are schematically shown in the drawings. The features and advantages which can be drawn from the claims, from the description and from the drawings might be considered essential alone or in combination with each other, for example by integrating certain details or steps of the previously disclosed method into a computer program product, wherein the computer program product, when executed on a computer, is enabled to control the system.

### Brief description of the drawings

The present invention is discussed in more detail with respect to the accompanying drawings, in which
- Figures 1 to 6: show different steps of a method for manufacturing a rotor blade for a wind turbine,
- Fig. 7: shows a computer-readable storage medium having a computer program product stored thereon,
- Fig. 8: shows a wind turbine, and
- Fig. 9: shows a system for manufacturing a rotor blade.

### Detailed description of the drawings

Elements and features having the same function and operating principle are labeled with the same reference signs in the drawings. The illustrations in the drawings are schematic.

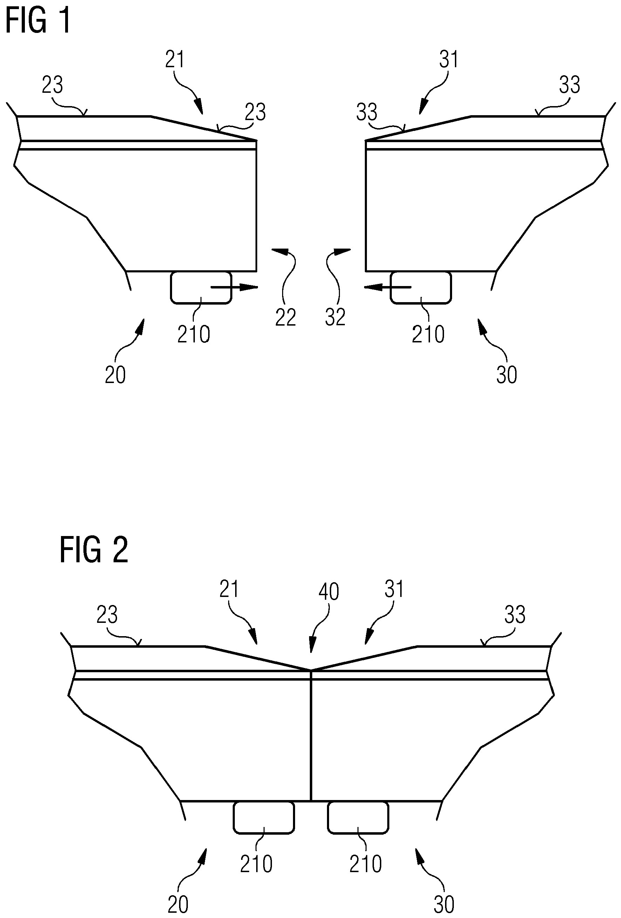

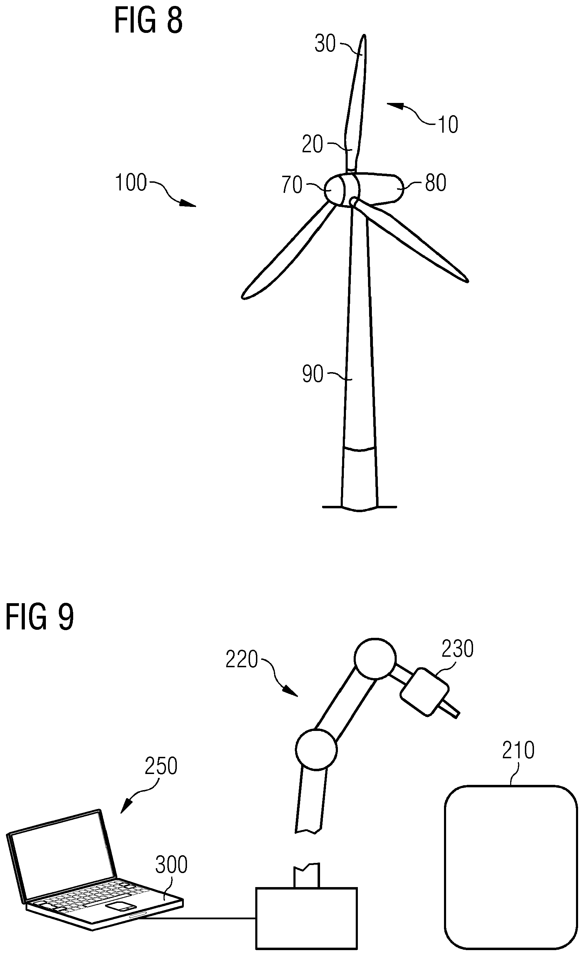

With regard to figures 1 - 6, a method for manufacturing a rotor blade 10 for a wind turbine 100, which is shown in Fig. 8, will be described.

In a first step, as shown in fig. 1, a root module 20 is provided having a root module recess 21 at a root module end side 22. Further, a tip module 30 is provided having a tip module recess 31 at a tip module end side 32.

As shown in fig. 2, the root module 20 and the tip module 30 are then placed next to each other to form a common connection recess 40 having the root module recess 21 and the tip module recess 31.

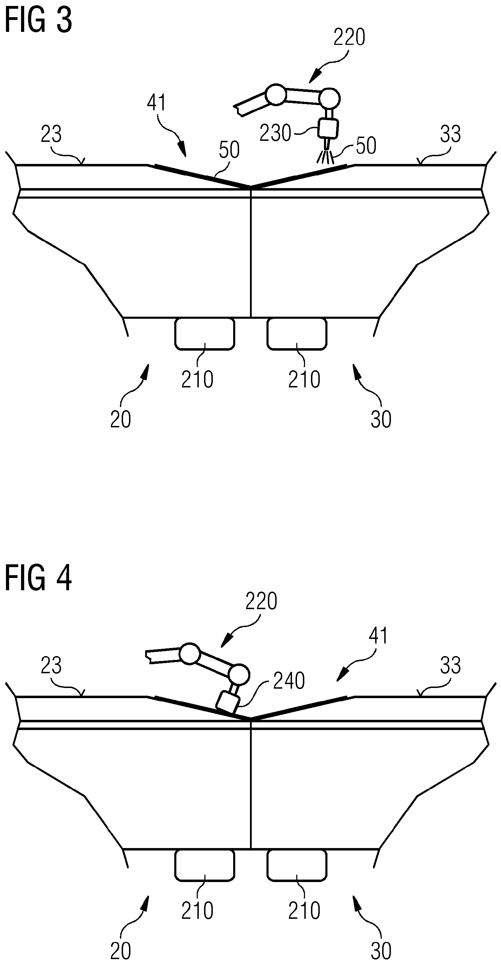

Afterwards, as shown in fig. 3, a connection material 50, in particular epoxy resin having fiber components, is sprayed onto the common connection recess 40 to provide and/or build a firmly bonded connection recess 41 between the root module 20 and the tip module 30. As can be seen from fig. 3, the connection material 50 is sprayed onto the common connection recess 40 by means of a robot 220 and a sprayer 230 mounted to the robot 220. In particular, the root module recess 21 is part of an outer root module surface 23, and the tip module recess 31 is part of an outer tip module surface 33, wherein the connection material 50 is sprayed onto the common connection recess 40 from the outer environment of the root module 20 and the tip module 30. Thereafter, the connection material is cured.

After that, as shown in fig. 4, the cured connection material 50 of the bonded connection recess 41 is activated by roughening the surface of the cured connection material 50 using an activation tool 240. In the present example, the activation tool 240 comprises a grinder for roughening the surface of the cured connection material 50.

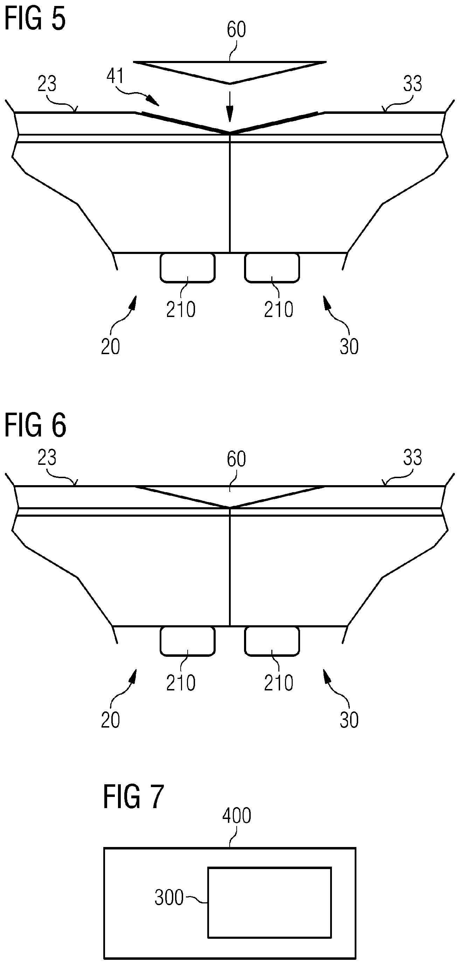

Afterwards, as shown in Fig. 5, a connection insert 60 is provided. The connection insert 60 is then, as shown in fig. 6, placed form-fit into the bonded and activated connection recess for coating and/or covering the connection material 50. The connection insert 60 is then firmly bonded to the bonded connection recess 41 by vacuum infusion.

Fig. 7 shows a computer-readable storage medium 400 as a flash-drive having stored thereon a computer program product 300 for executing the above-described method. That is, the computer program product 300 comprises instructions which, when the computer program product 300 is executed by a computer 250, cause the computer 250 and/or the system as shown in fig. 9 to carry out the above-described method.

In Fig. 8, a wind turbine 100 is shown comprising a hub 70, a nacelle 80 and a tower 90. The wind turbine 100 has three rotor blades 10, which were manufactured in accordance with the above-described method using the described system 200. Each rotor blade 10 comprises a root module 20 and a tip module 30.

Fig. 9 shows a system 200 for automatically performing the above-described method. The system 200 comprises a supporting structure 210 for supporting the root module 20 and the tip module 30 to form the common connection recess 40. The system 200 further comprises a robot 220 for spraying the connection material 50 onto the common connection recess 40 to provide the bonded connection between the root module 20 and the tip module 30. In addition, the system 200 comprises a computer 250 having the above-described computer program product 300 installed thereon for carrying out the above-described method.

The above description of the accompanying drawings is only by the way of detail and example. Specific features of each aspect of the present invention and the figures can be combined with each other if of technical sense and within the scope of the invention. Further embodiments are possible.

## Claims

1. A method for manufacturing a rotor blade (10) for a wind turbine (100), comprising:
- providing a root module (20) having a root module recess (21) at a root module end side (22),
- providing a tip module (30) having a tip module recess (31) at a tip module end side (32),
- positioning the root module (20) at the tip module (30) to form a common connection recess (40) with the root module recess (21) and the tip module recess (31), and
- spraying a connection material (50) onto the common connection recess (40) to provide a firmly bonded connection recess (41) between the root module (20) and the tip module (30).

2. The method according to claim 1, wherein the connection material (50) comprises a thermoset material.

3. The method according to one of the preceding claims, wherein the connection material (50) comprises a fiber composite material.

4. The method according to one of the preceding claims, wherein the connection material (50) is sprayed onto the common connection recess (40) by means of a robot (220) and a sprayer (230) mounted to the robot (220).

5. The method according to one of the preceding claims, wherein a connection insert (60) is firmly bonded to the bonded connection recess (41).

6. The method according to one of the preceding claims, comprising:
- curing the connection material (50),
- roughening the cured connection material (50) of the bonded connection recess (41), and
- coating the roughened connection material (50) with a connection insert (60).

7. The method according to one of the preceding claims, wherein the root module recess (21) is part of an outer root module surface (23) and the tip module recess (31) is part of an outer tip module surface (33), wherein the connection material (50) is sprayed onto the common connection recess (40) from the outer environment of the root module (20) and the tip module (30).

8. A system (200) for automatically performing the method according to one of the preceding claims, comprising:
- a supporting structure (210) for supporting the root module (20) and the tip module (30) together to form the common connection recess (40), and
- a robot (220) for spraying the connection material (50) onto the common connection recess (40) to provide the bonded connection between the root module (20) and the tip module (30).

9. A computer program product (300) comprising instructions which, when the computer program product (300) is executed by a computer (250), cause the computer (250) and/or the system of claim 8 to carry out the method according to one of claims 1 - 7.

10. A computer-readable storage medium (400) having stored thereon the computer program product (300) of claim 9.
